# DEMANDE DE BREVET EUROPEEN

(11) **EP 0 940 759 A1**
(43) Date de publication de la demande: **08.09.1999**
(21) Numéro de dépôt: 99200444.0
(22) Date de dépôt: 16.02.1999
(51) Int. Cl.: G06F 15/02

(54) **Dispositif permettant d'effectuer la conversion d'un nombre d'une unité en une autre unité, et notamment d'un montant d'une devise en une autre devise**

(30) Priorité: 16.02.1998 FR 9802047
(71) Demandeur: Psylogic Communication SàRL, 52210 Cour L'Eveque (FR)
(72) Inventeur: Espeche, Gil, 06480 La Colle-sur-Loup (FR); Fevre, Christophe, 52210 Cour l'Eveque (FR)
(74) Mandataire: Arbousse-Bastide, Jean-Claude Philippe

(57) **Abrégé**

Ce dispositif comprend deux écrans (11,12) d'affichage des unités, reliés à une unité centrale électronique (2) comportant un calculateur (21) de conversion d'une unité dans une autre et une mémoire (22) renfermant les programmes informatiques correspondant aux différents modes de fonctionnement, commandés par au moins deux boutons (14,15) permettant le choix du sens de conversion d'une unité vers l'autre unité ; la saisie du nombre de l'unité à convertir, affiché sur l'un des écrans (11,12), par incrémentations successives de chaque chiffre dudit nombre, à chaque pression sur l'un (14) desdits boutons, chaque chiffre étant validé par l'autre bouton (15); la mise à zéro, dans le mode conversion, des valeurs affichées sur les écrans (11,12) ; le résultat de ladite conversion étant affiché sur l'autre écran (11,12).

## Description

La présente invention a pour objet un dispositif permettant d'effectuer la conversion d'un nombre d'une unité en une autre unité, et notamment d'un montant d'une devise en une autre devise.

On connaît déjà des dispositifs permettant de convertir des devises telles que le franc par exemple en euro. Ces dispositifs comprennent généralement un boîtier muni d'un écran d'affichage de la valeur de conversion et d'un clavier de touches numériques pour l'entrée des valeurs numériques à convertir. Toutefois ces dispositifs, du fait des dimensions du clavier, ne sont pas intégrables dans des boîtiers de petites dimensions tels que ceux des montres-bracelets, ce qui limite leurs possibilités d'utilisation.

La présente invention a pour objet de remédier à cet inconvénient en proposant un dispositif qui soit intégrable dans un boîtier de petites dimensions, tel que celui d'une montre-bracelet, tout en offrant une facilité de saisie des données à convertir.

Le dispositif selon l'invention se caractérise essentiellement en ce qu'il comprend deux écrans d'affichage des unités reliés à une unité centrale électronique comportant un calculateur de conversion d'une unité dans une autre et une mémoire renfermant les programmes informatiques correspondant aux différents modes de fonctionnement, lesquels sont commandés par au moins deux boutons-poussoirs permettant :
- le choix du sens de conversion d'une unité vers l'autre unité,
- la saisie du nombre de l'unité à convertir, affiché sur l'un des écrans, par incrémentations successives de chaque chiffre dudit nombre, à chaque pression sur l'un desdits boutons, chaque chiffre étant validé par l'autre bouton,
- la mise à zéro des valeurs affichées sur les écrans en mode conversion,
le résultat de ladite conversion étant affiché sur l'autre écran.

Selon une caractéristique additionnelle de l'invention, la saisie du nombre de l'unité à convertir se fait par incrémentation du premier digit de l'écran concerné, par pressions successives sur l'un des boutons, jusqu'au chiffre voulu qui est validé par pression sur l'autre bouton, ce qui a pour effet de décaler le chiffre validé d'un digit vers la gauche, le premier digit étant alors initialisé à zéro pour être incrémenté jusqu'au deuxième chiffre du nombre à convertir, qui est ensuite validé et décalé d'un digit vers la gauche, et ainsi de suite par décalage de tous les digits jusqu'à la valeur du nombre à convertir.

Dans un mode de réalisation préférentiel de l'invention, à chaque incrémentation l'unité centrale calcule et affiche instantanément sur l'autre écran le résultat de la conversion du nombre incrémenté.

Dans un autre mode de réalisation préférentiel de l'invention un indicateur tel qu'une flèche lumineuse permet de savoir sur quel écran le nombre de l'unité à convertir est affiché.

La sélection du sens de conversion et la remise à zéro dans le mode conversion peuvent être réalisées, soit en exerçant une pression simultanée sur les deux boutons, soit en exerçant une pression d'une certaine durée sur l'un ou l'autre des boutons, soit en exerçant une pression sur un troisième bouton.

Les avantages et les caractéristiques de la présente invention ressortiront plus clairement de la description qui suit et qui se rapporte au dessin annexé, fourni à titre de simple illustration de l'invention, vis-à-vis de laquelle il ne présente aucun caractère limitatif.

Dans le dessin annexé:
- la figure 1 représente une vue en plan du cadran d'une montre-bracelet équipée du dispositif selon l'invention.
- la figure 2 représente le schéma fonctionnel général du dispositif selon l'invention.
- la figure 3 représente le schéma fonctionnel général du dispositif selon l'invention.
- la figure 3a représente le schéma fonctionnel du mode conversion du dispositif selon l'invention.
- la figure 3b représente le schéma fonctionnel du mode de sélection du sens de la conversion d'une devise en une autre devise.
- la figure 3c représente le schéma fonctionnel du mode opératoire pour entrer un montant d'une devise à convertir en une autre devise.
- la figure 3d représente le schéma fonctionnel du mode initialisation.

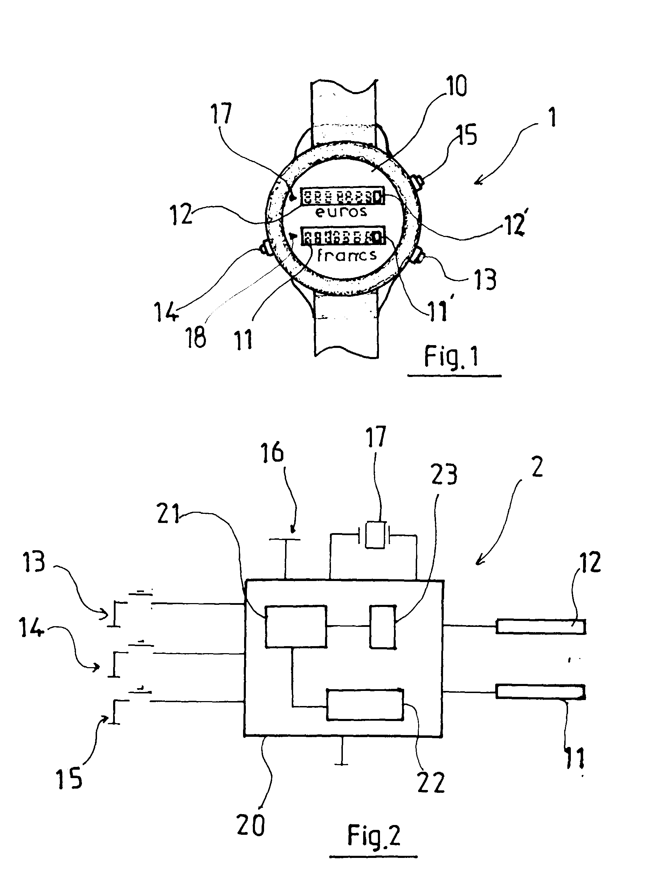

Si on se réfère à la figure 1 on peut voir le cadran 10 d'une montre 1 comprenant deux écrans 11 et 12 comportant chacun huit digits 11',12' et trois boutons 13,14,15 destinés à commander les différents modes de fonctionnement du dispositif selon l'invention.

Sur la figure 2 on peut voir un circuit électronique 2, intégré dans le boîtier de la montre 1 et comportant une unité centrale 20 constituée essentiellement d'un microprocesseur 21 connecté d'une part à une mémoire morte 22 qui renferme le programme informatique intégrant les différents modes de fonctionnement du dispositif, ainsi qu'un programme pour l'heure et la date, et d'autre part à des mémoires vives 23 permettant le stockage de données temporaires. Le circuit électronique 2 est relié aux boutons poussoirs 13,14,15, aux écrans 11 et 12, qui peuvent être des écrans à cristaux liquides, à une source de tension 16 telle qu'une pile au lithium de type bouton, et à une horloge 17.

Chaque écran 11,12 correspond à une certaine unité indiquée en dessous de l'écran correspondant. Dans le cas présent, l'écran 11 permet d'afficher un montant en francs et l'écran 12 un montant en euros.

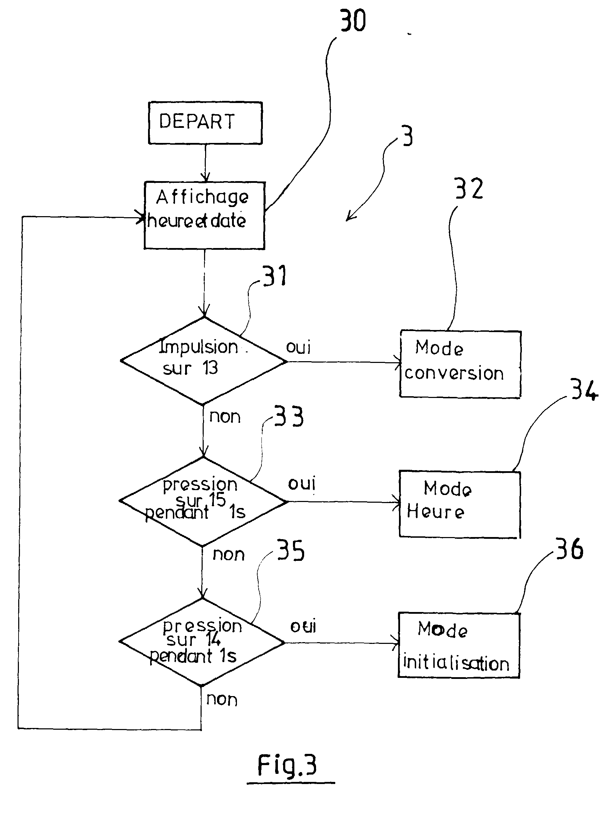

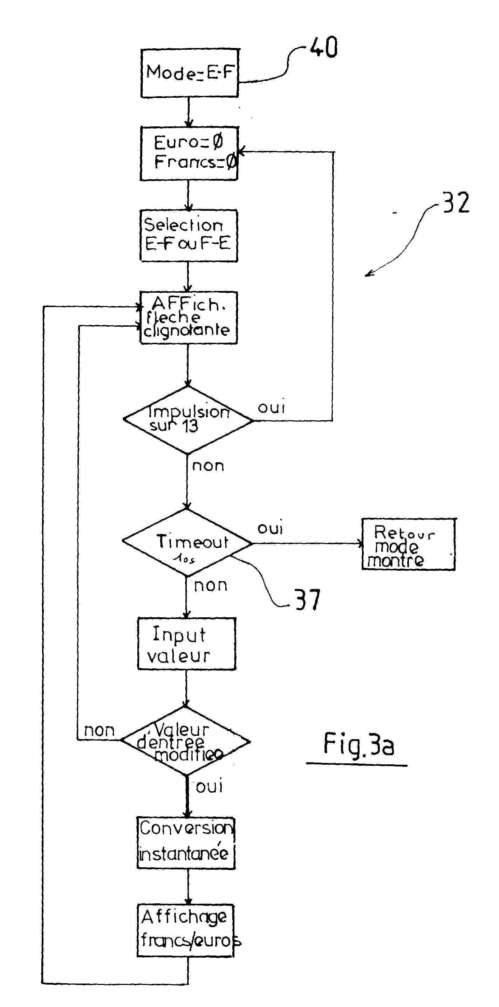

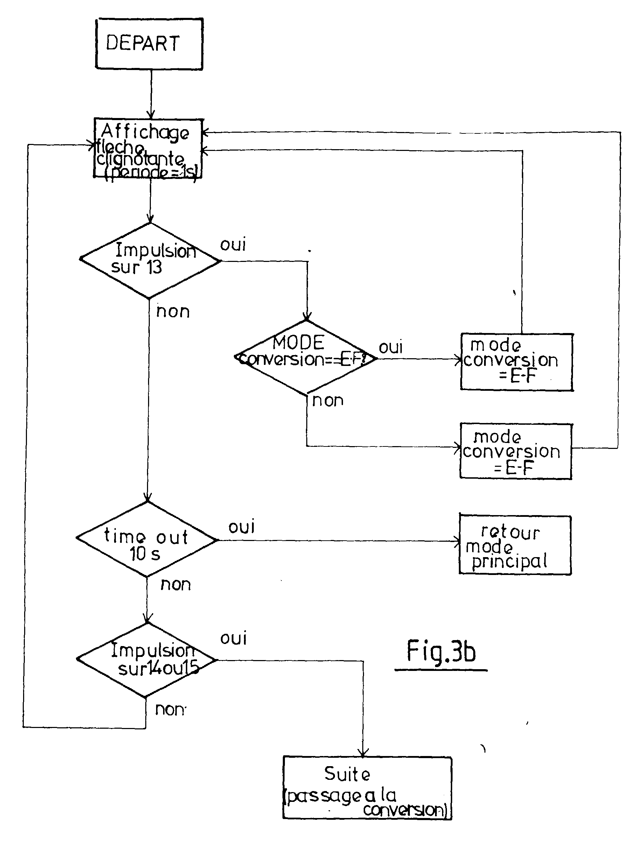

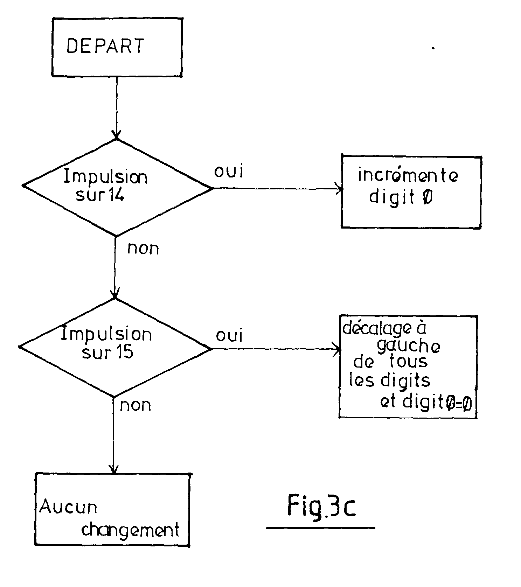

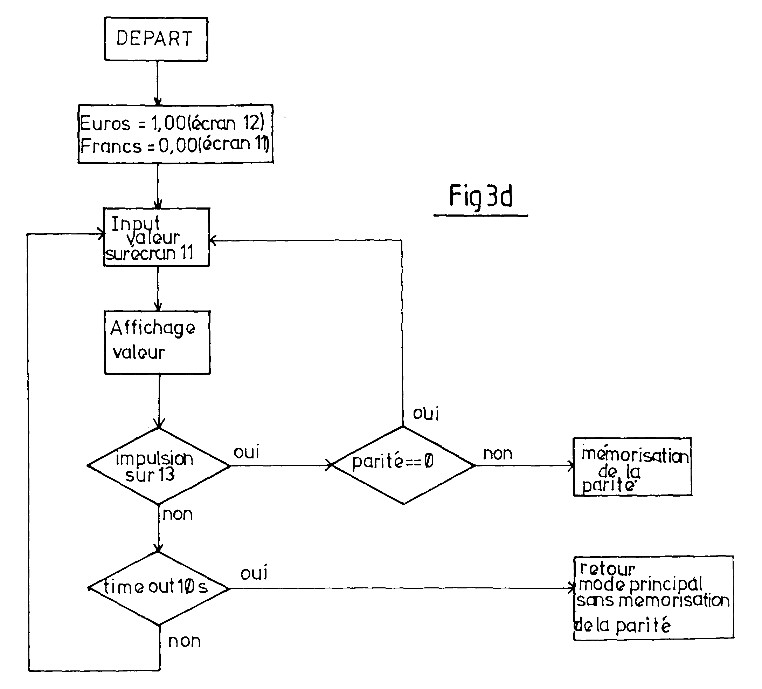

Si on se réfère à la figure 3 on peut voir qu'à partir de l'état initial 30 du mode principal 3, correspondant à l'affichage de l'heure et de la date sur les écrans d'affichage 11,12, une pression 31 sur le bouton poussoir 13 permet de passer en mode conversion 32, tandis qu'une pression 33 sur le bouton poussoir 15 permet de passer en mode heure 34 pour le réglage de l'heure et de la date, et une pression 35 sur le bouton poussoir 14 permet de passer en mode initialisation 36.

Le fonctionnement du mode conversion 32 est illustré par la figure 3a et permet à l'utilisateur de choisir une conversion euros/francs ou francs/euros. Ce mode démarre par défaut avec une conversion 40 euros/francs, le premier digit 11',12' à droite de chaque écran 11,12 affichant alors la valeur "0", comme on peut le voir sur la figure 1. Si l'utilisateur souhaite convertir des euros en francs il ne changera pas le sens de conversion dont le montant en euros s'affiche directement sur l'écran 12 et le résultat de la conversion sur l'écran 11. Pour convertir des francs en euros, l'utilisateur devra exercer une pression sur le bouton 13 pour modifier le sens de la conversion (figure 3b), le résultat de la conversion en euros s'affichant alors sur l'écran 12. Une flèche clignotante 17, visible en figure 1, indique l'écran 12 qui affichera le montant de la devise à convertir et renseigne donc visuellement l'utilisateur sur le sens de la conversion sélectionnée, euro/francs, flèche clignotante 17 en regard de l'écran 12, ou francs/euros, flèche clignotante 18 en regard de l'écran 11.

Les boutons poussoirs 14 et 15 permettent de saisir le montant de la devise à convertir dans le mode conversion 32, comme on peut le voir également sur la figure 3c, et l'entrée du montant se fait en incrémentant le premier digit de l'écran concerné 11 ou 12 d'une unité entre les valeurs "0" et "9", à chaque pression sur le bouton poussoir 14, jusqu'au chiffre voulu qui est validé en exerçant une pression sur le bouton 15, ce qui a pour effet de décaler ce chiffre d'un digit vers la gauche, le premier digit 11',12' étant alors initialisé à zéro.

L'utilisateur peut alors recommmencer l'opération pour la saisie du deuxième chiffre du nombre à convertir qui, une fois validé, est décalé d'un digit vers la gauche, et ainsi de suite par décalage de tous les digits jusqu'au nombre correspondant au montant désiré. A chaque incrémentation, le nombre incrémenté affiché sur l'écran 11 ou 12 est converti instantanément par le microprocesseur 21 dans l'autre unité, francs ou euros, et affiché sur l'autre écran 11 ou 12 .

Cette conversion en temps réel par incrémentation permet à l'utilisateur de rentrer une donnée à convertir sans avoir besoin d'un clavier de touches, tout en visualisant directement le résultat de la conversion simultanément, à chaque nouvelle modification de la valeur d'entrée.

On remarquera la position idéale du bouton 15 qui donne l'impression à l'utilisateur de pousser le chiffre vers la droite lors de sa validation, et qui est diamétralement opposé au bouton 14, pour faciliter les manoeuvres de ces deux boutons, entre le pouce et l'index de l'utilisateur.

La remise à zéro des écrans 11,12 en mode conversion 32 se fait en exerçant une pression sur le bouton 13, permettant à nouveau de choisir le sens de la conversion.

La figure 3d illustre le mode initialisation 34 qui permet à l'utilisateur de modifier la valeur de la parité entre les deux devises francs/euros en exerçant une pression durant un certain laps de temps, de préférence ls, sur le bouton 14 à partir de l'état initial 30 du mode principal 3.

Plusieurs laps de temps 37, chacun égal à environ 10s et repéré par la dénomination anglaise "Timeout" sur les figures 3a et 3b, permettent, lorsque l'utilisateur ne sollicite aucun bouton 13,14,15, de revenir automatiquement à l'affichage de l'heure et de la date, en mode principal.

On notera que le dispositif pourrait également fonctionner en utilisant seulement deux boutons, par exemple 14 et 15 : les fonctions commandées par la pression du bouton 13 seraient alors exécutées par exemple en exerçant une pression simultanée sur les deux boutons 14 et 15 ou par une pression d'une certaine durée sur l'un ou l'autre de ces boutons.

Le dispositif selon l'invention pourrait également comporter un quatrième bouton destiné à renseigner à tout instant l'utilisateur, par une pression, sur l'état des écrans d'affichage, c'est-à-dire des différents modes. Ainsi, en mode conversion, une pression sur ce quatrième bouton indiquerait l'état de la conversion à ce moment précis, en tenant compte du sens de la conversion.

Toutefois, en aucun cas une pression sur ce quatrième bouton ne pourrait modifier les actions en cours.

Le dispositif selon l'invention peut en outre comprendre un circuit d'émission sonore avec plusieurs types de sons distincts attachés chacun à une des opérations, et susceptible d'être coupé à l'aide du quatrième bouton, par exemple au moyen d'une pression prolongée ou de plusieurs pressions successives.

Ainsi un son A du type "bip" peut être attaché à l'incrémentation, un son B du type "crunch" au décalage et un son C du type "accord" à l'annonce du résultat.

A chaque incrémentation, la montre émet alors un son A et dit le chiffre atteint. Lorsque l'on appuie plusieurs fois successivement et rapidement sur le bouton d'incrémentation, la montre ne produit que des sons A à chaque impulsion et ne dit le chiffre atteint que lorsque l'on s'arrête.

A chaque décalage, la montre émet un son B et dit "zéro".

Au passage en mode conversion, la montre produit un son C suivi de l'annonce "Euro". De manière générale, à chaque remise à zéro ou à chaque changement de devise de départ, la montre émet un son C suivi de l'annonce de la monnaie de départ "Euro" ou "Francs".

Lorsqu'après le time-out, la montre retourne en mode heure, elle émet un double son A . De manière générale, après chaque time-out et retour au mode heure, la montre émet un double bip.

Une pression sur le quatrième bouton donne l'heure, une double pression donne la date.

A tout instant on peut connaître l'état de la conversion en cours par une pression sur le quatrième bouton. La lecture tient compte du sens de conversion.

Au passage en mode parité, la montre émet un son C suivi de l'annonce "parité", puis elle dit "zéro". Lorsque les chiffres de la base de conversion sont entrés, la montre annonce les chiffres puis dit "virgule". Lorsque l'on décale la virgule d'un rang vers la gauche, la montre émet un son A, puis annonce les chiffres en indiquant la position de la virgule. Lorsque l'on décale plusieurs fois rapidement la virgule, la montre ne produit que des sons A à chaque impulsion, et ne dit le résultat que lorsque l'on s'arrête.

Au passage en mode réglage de l'heure, la montre émet un son C suivi de l'annonce "heure".

Le dispositif selon l'invention permet de convertir très facilement des francs en euros ou autres devises, mais il peut être aussi adapté à la conversion d'unités de différentes grandeurs physiques en autres unités. Il peut en outre être intégré dans d'autres boîtiers de petites dimensions, tels que des briquets.

## Revendications

1. Dispositif permettant d'effectuer la conversion d'un nombre d'une unité en une autre unité, et notamment d'un montant d'une devise en une autre devise, caractérisé en ce qu'il comprend deux écrans (11,12) d'affichage des unités, reliés à une unité centrale électronique (2) comportant un calculateur (21) de conversion d'une unité dans une autre et une mémoire (22) renfermant les programmes informatiques correspondant aux différents modes de fonctionnement, commandés par au moins deux boutons (14,15) permettant :
- le choix du sens de conversion d'une unité vers l'autre unité,
- la saisie du nombre de l'unité à convertir, affiché sur l'un des écrans (11,12), par incrémentations successives de chaque chiffre dudit nombre, à chaque pression sur l'un (14) desdits boutons, chaque chiffre étant validé par l'autre bouton (15),
- la mise à zéro, dans le mode conversion, des valeurs affichées sur les écrans (11,12),
le résultat de ladite conversion étant affiché sur l'autre écran (11,12).

2. Dispositif selon la revendication 1 caractérisé en ce que la saisie du nombre de l'unité à convertir se fait par incrémentation du premier digit (11',12') de l'écran concerné (11,12), à chaque pression sur l'un (14) des boutons, jusqu'au chiffre voulu qui est validé en exerçant une pression sur l'autre bouton (15), ce qui a pour effet de décaler le chiffre validé d'un digit vers la gauche, le premier digit étant alors initialisé à zéro pour être incrémenté jusqu'au deuxième chiffre du nombre à convertir puis validé et décalé d'un digit vers la gauche, et ainsi de suite par décalage de tous les digits jusqu'à la valeur du nombre à convertir.

3. Dispositif selon la revendication 1 ou la revendication 2 caractérisé en ce qu'à chaque incrémentation le calculateur (21) calcule et affiche instantanément le résultat de la conversion du nombre incrémenté.

4. Dispositif selon l'une quelconque des revendications 1 à 3 caractérisé en ce que la sélection du sens de conversion et la remise à zéro dans le mode conversion (32) sont réalisées en exerçant une pression simultanée sur les deux boutons (14,15).

5. Dispositif selon l'une quelconque des revendications 1 à 3 caractérisé en ce que la sélection du sens de conversion et la remise à zéro dans le mode conversion (32) sont réalisées en exerçant une pression d'une certaine durée sur l'un ou l'autre des boutons (14,15).

6. Dispositif selon l'une quelconque des revendications 1 à 3 caractérisé en ce que la sélection du sens de conversion et la remise à zéro dans le mode conversion (32) sont réalisé en exerçant une pression sur un troisième bouton (13).

7. Dispositif selon l'une quelconque des revendications précédentes caractérisé en ce qu'un indicateur (17) permet de savoir sur quel écran (11,12) l'unité à convertir est affichée.

8. Dispositif selon l'une quelconque des revendications précédentes, caractérisé en ce qu'il comprend un quatrième bouton destiné à renseigner à tout instant l'utilisateur sur l'état des écrans d'affichage.
